# DEMANDE DE BREVET EUROPEEN

(11) **EP 1 586 240 A1**
(43) Date de publication de la demande: **19.10.2005**
(21) Numéro de dépôt: 04007791.9
(22) Date de dépôt: 31.03.2004
(51) Int. Cl.: A21D 8/04, A21D 2/22, A21D 2/02

(54) **Ameliorant de panification**

(71) Demandeur: LESAFFRE et Cie, 75001 Paris (FR)
(72) Inventeur: Lejeune-Luquet, Marie-Pierre, 59200 Tourcoing (FR); Julien, Pascal, 59700 Marcq-en-Baroeul (FR); Schubert, Eric, 94410 Saint-Maurice (FR)

(57) **Abrégé**

Améliorant solide de panification dont les matières sèches consistent essentiellement en un ou plusieurs ingrédients alimentaires hydrosolubles et au moins une enzyme, ledit améliorant solide contenant de l'acide ascorbique et donnant après dispersion de 10 g d'améliorant dans 100 g d'eau distillée un liquide ayant un pH de 3,8 à 7,0 ; un améliorant liquide étant obtenu par dispersion de l'améliorant solide dans une phase aqueuse.

## Description

La présente invention concerne un améliorant de panification contenant au moins une enzyme.

L'utilisation d'améliorants de panification à activité(s) enzymatique(s) est connue depuis longue date.

En particulier, il est connu d'utiliser de tels améliorants enzymatiques sous forme de poudre. Les améliorants enzymatiques pulvérulents présentent un certain nombre d'inconvénients. Les améliorants enzymatiques pulvérulents ont tendance à se disperser dans l'air et à se déposer partout dans la boulangerie. Ceci nécessite non seulement un nettoyage régulier de l'atelier, mais peut également causer des réactions allergiques chez les ouvriers. Les poudres sont également difficiles à doser de manière automatisée.

Ces problèmes ne sont résolus que partiellement par l'utilisation d'améliorants enzymatiques sous forme de granules.

Il a également été proposé d'utiliser des améliorants enzymatiques liquides. Ces améliorants liquides présentent, en effet, l'avantage de ne pas se disperser dans l'air et de limiter ainsi le risque de réactions allergiques chez les ouvriers. Les améliorants liquides permettent également un dosage automatisé, à condition que ledit améliorant liquide soit homogène au moment du dosage. Cependant, les améliorants liquides sont le plus souvent formulés avec des ingrédients gras liquides ou avec des polyols, qui ne sont pas autorisés dans certaines formules de panification et/ou dans certains pays. De plus, la présence de matière grasse n'est pas toujours appréciée par les consommateurs de nos jours.

Les améliorants liquides présentent également le désavantage que leur transport est coûteux du fait qu'on doit transporter des volumes nettement plus importants, étant donné que les ingrédients actifs sont dilués dans la phase liquide. Etant donné leur volume plus élevé, les améliorants liquides nécessitent en général des conteneurs de transport hygiéniques plus chers et plus encombrants, ce qui est en particulier le cas pour de tels conteneurs rigides. Ceci oblige le boulanger à réserver une partie non-négligeable de son atelier pour le stockage de conteneurs vides. En outre, dans un nombre croissant de pays, ce type d'emballage est soit récupéré par le fournisseur de l'améliorant lorsqu'il est consigné, soit assujetti à une taxe dite « écologique ».

La présente invention propose un améliorant de panification contenant au moins une enzyme, lequel améliorant permet de combiner des avantages des deux types d'améliorants enzymatiques décrits ci-dessus.

A cette fin, la présente invention propose un améliorant solide à activité enzymatique ayant une composition spécifiquement conçue pour permettre au boulanger de réaliser, dans sa boulangerie, un améliorant liquide de bonne qualité par simple dispersion dans une phase aqueuse dudit améliorant solide.

La présente invention concerne notamment un améliorant solide de panification dont les matières sèches consistent essentiellement, c'est-à-dire pour au moins 80% en masse, en un ou plusieurs ingrédients alimentaires hydrosolubles et au moins une enzyme. De préférence, les matières sèches de l'améliorant consistent pour au moins 90% en masse, de préférence pour au moins 95% en masse et encore de préférence pour au moins 97% en masse et plus de préférence encore pour au moins 99% en masse d'une ou plusieurs enzymes et d'un ou plusieurs ingrédients alimentaires hydrosolubles.

Dans le présent contexte, on comprend par « ingrédient hydrosoluble », un ingrédient qui présente une capacité à se dissoudre totalement dans l'eau distillée à 10°C, et de préférence aussi à 2°C, à une teneur en masse par rapport à l'eau distillée au moins aussi importante que celle à laquelle il se trouvera dans l'améliorant liquide obtenu à partir de l'améliorant solide selon la présente invention ; et dont les solutions aqueuses restent stables sans agitation, pendant au moins 24 heures, de préférence pendant au moins 48 heures. De préférence, un « ingrédient hydrosoluble » est un ingrédient qui a la capacité de se dissoudre dans l'eau potable à une température entre +1 °C et +20°C, à une teneur en masse par rapport à la quantité d'eau potable, d'au moins 1%, de préférence d'au moins 5%, et encore de préférence d'au moins 20%, l'eau potable étant définie par la directive 98/83/CE du Conseil du 3 novembre 1998. De tels ingrédients hydrosolubles sont, par exemple, les sels alimentaires qui se dissolvent dans l'eau. La farine de blé est quant à elle un exemple d'un ingrédient non-hydrosoluble.

Il va de soi que les ingrédients de l'améliorant solide de panification sont choisis parmi les ingrédients appropriés pour la panification.

L'améliorant selon l'invention contient en particulier l'antioxydant acide ascorbique en tant qu'ingrédient alimentaire hydrosoluble, étant rappelé que l'acide ascorbique est immédiatement oxydé dans la pâte et a ensuite un rôle d'oxydant de la pâte.

L'améliorant solide présente une teneur en matières sèches d'au moins 80% en masse. L'améliorant peut en particulier présenter une teneur en matières sèches d'au moins 90% en masse, de préférence d'au moins 95% en masse et encore de préférence d'au moins 97% en masse.

Selon l'invention, les ingrédients alimentaires hydrosolubles de l'améliorant solide, leurs concentrations et leurs rapports sont choisis de manière à ce qu'après dispersion dans 100 parties en poids d'eau distillée de 10 parties en poids d'améliorant, on obtient un liquide ayant un pH de 3,8 à 7,0 ; de préférence de 4,0 à 6,5 et encore de préférence de 4,5 à 6,3.

Comme indiqué ci-dessus, l'améliorant solide selon l'invention permet au boulanger de réaliser, dans la boulangerie, un améliorant liquide enzymatique par dispersion de l'améliorant solide dans une phase aqueuse. Il est évident que le boulanger n'utilisera normalement pas de l'eau distillée pour réaliser l'améliorant liquide. En général, le boulanger réalisera l'améliorant liquide en dispersant l'améliorant solide dans une partie de l'eau de coulage de la pâte. Dans le contexte de la présente description de l'invention, certaines caractéristiques de l'améliorant solide ont toutefois été définies sur la base d'un test comprenant la dispersion de 10 parties en poids de l'améliorant solide dans 100 parties en poids d'eau distillée afin d'assurer la reproductibilité du test.

L'améliorant solide contient de préférence un ou plusieurs ingrédients tampons alimentaires hydrosolubles, les ingrédients tampons correspondants selon la définition donnée dans le Römpp Lexikon Chemie (10^{ème} édition, 1999, Band 5 (ISBN 3-13-735010-7), page 3618) à :
- des sels d'un acide faible avec une base forte,
- des sels d'un acide fort avec une base faible,
- des combinaisons d'un acide faible avec au moins un de ses sels.

De préférence, les ingrédients tampons sont choisis dans la famille des sels d'un acide faible avec une base forte.

De préférence, les ingrédients de l'améliorant solide, et en particulier ses ingrédients alimentaires hydrosolubles, tels que les ingrédients tampons, leurs concentrations et leurs rapports sont choisis de manière à ce qu'après la dispersion de 10 parties en poids d'améliorant solide dans 100 parties en poids d'eau distillée, on obtient un liquide possédant un pouvoir tampon tel qu'un ajout de 1 ml d'HCl 1 N à 110 g dudit liquide donne une variation de pH (en valeur absolue) inférieure ou égale à 0,50 ; de préférence inférieure ou égale à 0,20 ; encore de préférence inférieure ou égale à 0,10 ; et encore plus de préférence inférieure ou égale à 0,08.

L'améliorant solide selon l'invention permet notamment de réaliser après dispersion dans une phase aqueuse, de préférence de l'eau, un améliorant liquide enzymatique pouvant être conservé pendant au moins 24 heures à une température de moins de 10°C, de préférence pendant au moins 48 heures, et ceci sans perte significative de son efficacité en tant qu'améliorant de panification.

La présente invention permet ainsi au boulanger de préparer en une fois la quantité d'améliorant liquide enzymatique correspondant à son besoin pour les 24 heures, voire les 48 heures suivantes, à partir d'un améliorant solide sous forme d'une poudre ou de granules, apportant de manière concentrée les oxydants, éventuellement les réducteurs, et les enzymes nécessaires à sa panification.

Le boulanger peut ainsi éviter les inconvénients de l'achat d'un améliorant liquide, tout en profitant des avantages des améliorants liquides, et notamment de leur facilité de dosage, et en limitant à un minimum la formation de poussière liée à l'utilisation d'un améliorant enzymatique solide.

Comme indiqué précédemment, le boulanger dispersera typiquement l'améliorant solide dans tout ou partie de l'eau de coulage de la pâte, en général une faible partie de l'eau de coulage de la pâte. Le boulanger peut aussi disperser l'améliorant solide dans tout ingrédient liquide de sa recette comportant une phase aqueuse, comme de la crème de levure, du lait,....

L'améliorant solide selon l'invention peut contenir un ou plusieurs ingrédients alimentaires hydrosolubles appartenant au groupe des acétates et des lactates, ces deux sels étant couramment utilisés et autorisés en panification courante. D'autres ingrédients appropriés sont les sels alimentaires hydrosolubles appartenant à la familles des fumarates, des malates, des citrates, des propionates, des phosphates, des carbonates utilisés dans certains pays (Etats-Unis par exemple) ou dans des panifications spéciales (pain de seigle par exemple). Il est rappelé que les sels de sodium et de potassium sont en général plus solubles que les sels de calcium. Les sels alimentaires sont par définition tous les sels autorisés comme additifs dans l'Union Européenne (directive du Parlement européen et du Conseil N° 95/2 CE) ou aux Etats-Unis d'Amérique (Code of Federal Regulation 21 - Food and Drug).

De préférence, l'améliorant solide contient de l'acétate de calcium et/ou du lactate de calcium. Des résultats très positifs, présentant notamment un effet tampon élevé, ont été obtenus avec de l'acétate de calcium, comme notamment l'acétate de calcium anhydre, en tant qu'ingrédient hydrosoluble.

Au cas où l'améliorant solide contient des ascorbates, ceux-ci ont un rôle à la fois d'ingrédients tampons et d'oxydants des farines, et ils peuvent remplacer totalement ou partiellement l'acide ascorbique. Selon l'invention, l'améliorant solide contient de l'acide ascorbique et/ou des ascorbates, dans une quantité exprimée en équivalent acide ascorbique ayant le pouvoir oxydant requis pour la panification. Dans la présente description à l'exception des exemples, et dans les revendications, l'expression « acide ascorbique » englobe toute composition consistant en de l'acide ascorbique et/ou des ascorbates, ayant en équivalent acide ascorbique, le pouvoir oxydant des pâtes requis dans la formule, étant entendu que les formes les plus préférées de réalisation de l'invention sont réalisées avec de l'acide ascorbique, au sens strict, c'est-à-dire sous la forme acide, comme décrit dans les exemples.

Suivant une forme de réalisation, l'améliorant selon l'invention comprend au moins une enzyme choisie dans le groupe des amylases, des hémicellulases, des glucose oxydases, des amyloglucosidases, des lipases, des phospholipases, des sulfhydryle oxydases, des protéases et des peroxydases ; de préférence, il comprend une combinaison desdites enzymes. De manière utile, l'améliorant comprend au moins une alpha-amylase choisie dans le groupe des alpha-amylases fongiques et bactériennes ou une combinaison desdites alpha-amylases, en particulier l'améliorant peut comprendre une alpha-amylase anti-rassissante, comme par exemple une alpha-amylase maltogène. L'améliorant solide peut contenir une combinaison d'au moins une alpha-amylase avec au moins une hémicellulase. Il contient avantageusement de 0,5 à 3,0% en masse d'alpha-amylase(s) et de 1,0 à 30,0% en masse d'hémicellulase(s), de préférence de 1,0 à 2,0% en masse d'alpha-amylase(s) et de 1,2 à 15,0% en masse d'hémicellulase(s). De préférence, ladite hémicellulase est une xylanase ou un mélange de xylanases.

De manière utile, l'améliorant solide peut contenir, en particulier en plus de la combinaison d'alpha-amylase(s) et d'hémicellulase(s) ci-dessus, une quantité de glucose oxydase(s) et/ou une quantité de phospholipase(s) ayant le même effet technologique qu'un ajout d'esters diacétyl tartriques de mono et diglycérides d'acides gras (émulsifiants E472e) réalisé à une dose comprise entre 0,05% et 0,30% en masse par rapport à 100 parties en masse de farine (pourcentage du boulanger).

De manière utile, l'améliorant solide contient de 2 à 30% en masse d'acide ascorbique, de préférence de 5 à 20% en masse, et encore de préférence de 7 à 15% en masse.

L'améliorant peut également comprendre d'autres ingrédients alimentaires hydrosolubles, et en particulier de tels ingrédients alimentaires hydrosolubles utilisés en boulangerie et notamment ceux qui ont un effet d'améliorant de panification. Des exemples d'un tel ingrédient alimentaire hydrosoluble sont le monochlorhydrate de L-cystéïne et le chlorure de sodium. De manière préférentielle, l'améliorant solide selon l'invention comprendra tous les oxydants de la pâte, éventuellement tous les réducteurs de la pâte, toutes les préparations enzymatiques nécessaires au type de panification envisagée, qu'il s'agisse de la fabrication, quel que soit le procédé, de pains, de viennoiseries, de brioches, et de manière générale de toute pâte fermentée.

L'améliorant solide selon l'invention peut-être granulaire ou pulvérulent. La forme granulaire présente l'avantage d'être moins poussiéreuse et d'avoir une moindre tendance à se disperser dans l'air. Le diamètre moyen des particules de l'améliorant est de préférence entre 50 µm et 300 µm, encore de préférence entre 80 µm et 150 µm et encore de préférence entre 80 µm et 120 µm. De manière avantageuse, la quantité de particules fines ayant un diamètre inférieur à 50 µm correspond à moins de 30% en masse, de préférence à moins de 15% en masse de l'améliorant solide.

L'améliorant solide selon l'invention présente l'avantage important de se disperser aisément dans une phase liquide de manière à obtenir un améliorant liquide, ce qui permet au boulanger de bénéficier des avantages des améliorants liquides, tout en se procurant un améliorant solide plus compact.

La présente invention concerne donc également l'utilisation dans la préparation en boulangerie d'un améliorant liquide de panification, ledit améliorant liquide de panification étant obtenu par dispersion d'un améliorant solide tel que défini ci-dessus dans une phase liquide aqueuse, de préférence de l'eau. L'invention concerne aussi l'utilisation d'un tel améliorant solide dans la préparation d'une pâte pour produit cuit de boulangerie, comprenant l'obtention d'un améliorant liquide par dispersion dudit améliorant solide dans une phase liquide aqueuse, de préférence de l'eau - c'est-à-dire dans au moins une partie de l'eau de coulage de la pâte -, et incorporation de l'améliorant liquide dans la pâte. La pâte, qui contient typiquement de la levure de boulangerie en tant qu'agent de fermentation, est par exemple une pâte à pain, une pâte pour brioche ou une pâte pour viennoiserie.

Une telle utilisation de l'améliorant solide peut permettre de réduire le nombre d'ingrédients que le boulanger doit doser séparément. Ce résultat peut être obtenu du fait que l'améliorant solide contient plusieurs ingrédients de la pâte et/ou en réalisant l'améliorant liquide par combinaison de l'améliorant solide avec un ou plusieurs autres ingrédients de la formulation panaire.

L'améliorant liquide est de préférence incorporé dans la pâte en une quantité correspondant à un pourcentage du boulanger de l'améliorant solide de 0,01 à 1,00 ; de préférence de 0,05 à 0,50 ; encore de préférence de 0,08 à 0,25 ; c'est-à-dire de manière à obtenir dans la pâte, pour 100 kg de farine mise en oeuvre, de 0,01 à 1,00 kg ; de préférence de 0,05 à 0,50 kg et encore de préférence de 0,08 à 0,25 kg de l'améliorant solide. Le pourcentage du boulanger est un pourcentage en masse d'utilisation d'un ingrédient calculé par rapport à 100 parties en masse de la farine mise en oeuvre.

De préférence, l'améliorant solide est dispersé dans la phase aqueuse de manière à obtenir un améliorant liquide enzymatique contenant de 1 à 25 % en masse, de préférence de 3 à 20% en masse et encore de préférence de 6 à 12% en masse de l'améliorant solide.

Grâce à la composition spécifique de l'améliorant solide, le boulanger peut ainsi aisément préparer un améliorant liquide en boulangerie. En préparant, en une fois, une quantité d'améliorant liquide suffisante pour plusieurs lots de pâte boulangère, voire en préparant, en une fois, une quantité d'améliorant liquide suffisante pour une journée ou plus, le boulanger peut limiter les inconvénients des améliorants solides à un minimum.

L'invention concerne aussi un procédé pour la préparation d'une pâte pour produit cuit de boulangerie. Ce procédé selon l'invention comprend la dispersion, dans une phase liquide aqueuse, de préférence de l'eau, d'un améliorant solide selon l'invention, de manière à obtenir un améliorant liquide enzymatique, et l'incorporation d'une quantité dudit améliorant liquide dans la pâte. L'invention concerne également un procédé pour la préparation d'un produit cuit de boulangerie. Ce procédé comprenant, la dispersion dans une phase liquide aqueuse, de préférence de l'eau, d'un améliorant solide selon l'invention, de manière à obtenir un améliorant liquide enzymatique, l'incorporation d'une quantité dudit améliorant liquide dans la pâte, et la cuisson de la pâte obtenue.

Dans ces procédés selon l'invention, l'améliorant liquide est avantageusement incorporé dans la pâte en une quantité correspondant à un pourcentage du boulanger de l'améliorant solide de 0,01 à 1,00 ; de préférence de 0,05 à 0,50 ; encore de préférence de 0,08 à 0,25 ; c'est-à-dire de manière à obtenir dans la pâte, pour 100 kg de farine mise en oeuvre, de 0,01 à 1,00 kg ; de préférence de 0,05 à 0,50 kg et encore de préférence de 0,08 à 0,25 kg de l'améliorant solide.

De manière préférée, l'améliorant liquide contient de 1 à 25 % en masse, de préférence de 3 à 20% en masse et encore de préférence de 6 à 12% en masse de l'améliorant solide. De manière préférée, entre la dispersion de l'améliorant solide dans la phase liquide aqueuse et son incorporation dans la pâte, l'améliorant liquide est de préférence conservé à une température de 10°C ou moins, de préférence de 2°C à 4°C.

L'améliorant liquide peut être incorporé dans la pâte au moins jusqu'à 24 heures, de préférence au moins jusqu'à 48 heures après sa préparation par dispersion de l'améliorant solide dans la phase liquide aqueuse. La pâte dans laquelle l'améliorant liquide est incorporé peut contenir de la levure de boulangerie en tant qu'agent de fermentation. Dans ce cas, la pâte contenant la quantité de l'améliorant liquide est soumise à une étape de fermentation de la pâte par la levure de boulangerie.

La pâte peut être une pâte à pain, une pâte pour brioche ou une pâte pour viennoiserie, cette pâte pouvant être utilisée dans le cadre des technologies boulangères du direct, du précuit ou du surgelé.

L'améliorant solide selon l'invention peut également être dispersé dans de la crème de levure, c'est-à-dire une suspension aqueuse de cellules de levure de boulangerie, avant son incorporation dans la pâte.

De préférence, l'améliorant solide selon l'invention, les procédés selon l'invention utilisant cet améliorant solide, sont des améliorants pour pains français et des procédés pour la fabrication de pains français, c'est-à-dire des pains ne contenant ni matière grasse ni sucre ajouté.

### Exemples

L'améliorant solide de la présente invention peut de manière avantageuse être utilisé dans un grand nombre d'applications. Des exemples illustratifs de l'améliorant solide et ses applications sont donnés ci-dessous.

### Exemple 1 : Exemples de composition de l'améliorant solide

**Tableau 1**

| Composition | Améliorant 1: ex. de composition (% en masse) | Améliorant 2: ex. de composition (% ne masse) | Améliorant 3: ex. de composition (% en masse) |
|---|---|---|---|
| Acétate de calcium | 86,5 | 77,5 | 83,0 |
| Alpha-amylase | 1,0 | 1,0 | 2,0 |
| Acide ascorbique* | 10,0 | 10,0 | 10,0 |
| Hemicellulase | 2,5 | 2,5 | 3,0 |
| Glucose oxydase | - | 4,5 | - |
| Phospholipase | - | 4,5 | - |
| Monochlorhydrate de L-cystéine | - | - | 2,0 |

| | | | |
|---|---|---|---|
| *L'acide ascorbique est de l'acide ascorbique au sens strict, c'est-à-dire, entièrement sous forme acide. | | | |

### Exemple 2 :Préparation de l'améliorant liquide enzymatique à partir de l'améliorant solide

100 g de chacun des 3 améliorants solides de l'exemple 1 sont dispersés dans 1 litre (=1000 g) d'eau distillée. La dispersion est réalisée sous agitation à l'aide d'un barreau aimanté (à l'échelle du laboratoire) ou d'une pâle (à l'échelle industrielle en boulangerie).

Le pH des 3 améliorants liquides ainsi obtenus et leurs pouvoirs tampon sont donnés dans le tableau 2 ci-après.

**Tableau 2**

| | Améliorant 1 | Améliorant 2 | Améliorant 3 |
|---|---|---|---|
| pH solution obtenue par dispersion à 10% | 5,56 | 5,60 | 5,48 |
| pH obtenu après ajout de 1ml d'HCl 1N à 110 g de la solution obtenue par dispersion à 10% | 5,49 | 5,52 | 5,42 |
| Δ pH (en valeur absolue) | 0,07 | 0,08 | 0,06 |

L'améliorant liquide ainsi obtenu peut être conservé sans agitation à 10°C pendant 24 ou 48 heures.

### Exemple 3 : Analyse de la solubilité et de la stabilité enzymatique de deux améliorants sur 48 heures

L'étude de la solubilité et de la stabilité enzymatique porte sur les améliorants hydrosolubles 1 et 2 tels que décrits dans l'exemple 1. Les améliorants solides sont dispersés dans l'eau distillée à raison de 100 g de poudre pour 1000 g d'eau distillée dans des éprouvettes de 1 litre.
La dispersion est réalisée sous agitation à l'aide d'un barreau aimanté pendant 15 minutes. Les deux solutions ainsi obtenues sont placées en chambre réfrigérée à 10°C pendant 48 heures.
Des prélèvements à la surface et au fond des éprouvettes sont réalisés à T=0 h, T=24 h et T= 48 h. Sur ces différents échantillons des dosages des activités enzymatiques contenues dans les améliorants ont été effectués.
Au cours des 48 heures de stockage, aucun gradient vertical d'activité enzymatique n'était observé dans les phases liquides.

### Exemple 4 : Exemple d'utilisation de l'améliorant liquide

La panification de type français au sens strict, c'est-à-dire les procédés de panification où la pâte ne contient ni matières grasses ni sucres ajoutés est très contraignante pour le boulanger, qui doit proposer du pain frais, venant d'être cuit dès 7 heures du matin, voire avant.
Une formule boulangère de panification pouvant être utilisée avec ledit améliorant est la suivante :

**Tableau 3**

| Formule boulangère | Pourcentage du boulanger | |
|---|---|---|
| | a | b |
| Farine de blé | 100,0 | 100,0 |
| Eau | 64,0 | 63,0 |
| Sel | 2,0 | 2,0 |
| Levure pressée | 2,0 | 2,0 |
| Améliorant solide en poudre | 0,1 1 | |
| Améliorant liquide à 10 parties en poids d'améliorant solide sur 100 parties en poids d'eau | | 1,1 |

Le diagramme de panification appliqué à la recette ci-dessus est le suivant :
1. Placer les ingrédients dans une cuve d'un pétrin à spirale.
2. Démarrer le pétrissage selon le programme suivant :
   * en 1^{ère} vitesse pendant 4 min
   * en 2^{ème} vitesse pendant 5 min.
3. Obtention d'une pâte ayant une température de 24,5°C +/- 0.5°C.
4. Pointage de la masse pendant 20 min.
5. Division en pâtons de 350 g.
6. Façonnage
7. Apprêt en parisien (chambre de pousse en bois) à température ambiante à 23°C.
8. Cuisson dans un four à sole à 215/230°C pendant 32 min.
9. Mesure du volume des pains après un refroidissement d'au moins une heure et appréciation de la note des pains obtenus.
Les tests de panification ont été réalisés :
- soit directement avec les améliorants solides 1 et 2 tels que décrits dans l'exemple 1 à un pourcentage du boulanger de 0, 1 % (tableau 3, colonne a),
- soit avec les améliorants liquides 1 et 2 correspondants tels que décrits dans l'exemple 2, lesdits améliorants liquides étant utilisés à un pourcentage du boulanger de 1,1 %, (tableau 3, colonne b).

Les volumes spécifiques des pains obtenus avec les améliorants liquides ont été comparés avec les volumes spécifiques des pains obtenus avec les améliorants solides correspondants.

Ces tests ont également permis de tester la conservation des améliorants liquides, puisqu'une panification a été réalisée dès constitution de l'améliorant sous forme liquide, et après 24 h et 48 h de conservation à moins de 10°C.

**Tableau 4**

| | Améliorant de composition 1 | Améliorant de composition 2 |
|---|---|---|
| Améliorant solide | T | T |
| A. liquide à T=0h | - 0,5% | - 0,6% |
| A. liquide à T=24h | + 0,2% | - 0,8% |
| A. liquide à T=48h | - 0,9% | - 1,0% |
| T = témoin | | |

La qualité et les volumes spécifiques des pains français de type bâtard obtenus avec les améliorants 1 et 2 ne sont pas significativement différents quand l'améliorant solide est utilisé en tant que tel où s'il est utilisé sous la forme d'un améliorant liquide obtenu par dispersion de l'améliorant solide dans l'eau, ceci reste vrai après conservation de l'améliorant liquide 48 heures à moins de 10°C.

## Revendications

1. Améliorant solide de panification ayant une teneur en matières sèches supérieure ou égale à 80% en masse, lesdites matières sèches consistant essentiellement en un ou plusieurs ingrédients alimentaires hydrosolubles et au moins une enzyme, ledit améliorant solide :
• contenant de l'acide ascorbique ;
• donnant après dispersion dans 100 parties en poids d'eau distillée de 10 parties en poids de l'améliorant solide, un liquide ayant un pH de 3,8 à 7,0 ; de préférence de 4,0 à 6,5, et encore de préférence de 4,5 à 6,3.

2. Améliorant solide selon la revendication 1 ayant au moins l'une des caractéristiques a, b, c et d suivantes :
a) une teneur en matières sèches supérieure ou égale à 90% en masse, de préférence supérieure ou égale à 95% en masse et encore de préférence supérieure ou égale à 97% en masse ;
b) les matières sèches consistent pour au moins 90% en masse, de préférence pour au moins 95% en masse, de préférence pour au moins 97% en masse, encore de préférence pour au moins 99% en masse d'une ou plusieurs enzymes et d'un ou plusieurs ingrédient(s) hydrosoluble(s) ;
c) contient au moins un ingrédient alimentaire hydrosoluble choisi dans le groupe des ingrédients tampons, les ingrédients tampons étant définis comme :
• les sels d'un acide faible avec une base forte,
• les sels d'un acide fort avec une base faible, et
• les combinaisons d'un acide faible avec au moins un de ses sels.
d) 10 parties en poids dudit améliorant solide dispersées dans 100 parties en poids d'eau distillée donnent un liquide ayant un pouvoir tampon tel qu'un ajout de 1 ml d'HCl 1N à 110 g dudit liquide donne une variation de pH inférieure ou égale à 0,50 ; de préférence inférieure ou égale à 0,20 ; encore de préférence inférieure ou égale à 0,10 ; et encore plus de préférence inférieure ou égale à 0,08.

3. Améliorant selon la revendication 2, ayant au moins deux, de préférence au moins trois des caractéristiques a, b, c et d, et encore de préférence les quatre caractéristiques a, b, c, et d.

4. Améliorant selon l'une quelconque des revendications précédentes, donnant après dispersion dans une phase aqueuse, de préférence de l'eau, un améliorant liquide de panification se conservant au moins 24 heures à moins de 10°C, de préférence au moins 48 heures à moins de 10°C.

5. Améliorant selon l'une quelconque des revendications précédentes contenant un ou plusieurs ingrédients alimentaires hydrosolubles choisis dans le groupe des carbonates, des phosphates, des acétates, des lactates, des citrates, des malates, des fumarates, et des propionates.

6. Améliorant selon l'une quelconque des revendications précédentes contenant un ou plusieurs ingrédients alimentaires hydrosolubles appartenant au groupe des lactates, acétates et citrates.

7. Améliorant selon l'une quelconque des revendications 1 à 6 contenant un ingrédient alimentaire hydrosoluble choisi dans le groupe consistant en l'acétate de calcium et le lactate de calcium, ou une combinaison desdits ingrédients.

8. Améliorant granulaire ou pulvérulent selon l'une quelconque des revendications 1 à 7.

9. Améliorant selon l'une quelconque des revendications précédentes comprenant au moins une enzyme choisie dans le groupe des amylases, des hémicellulases, des glucose oxydases, des amyloglucosidases, des lipases, des phospholipases, des sulfhydryles oxydases, des protéases, des peroxydases et de préférence comprenant une combinaison desdites enzymes.

10. Améliorant selon l'une quelconque des revendications précédentes comprenant au moins une alpha-amylase fongique ou bactérienne.

11. Améliorant selon l'une quelconque des revendications précédentes comprenant au moins une alpha-amylase maltogène.

12. Améliorant selon l'une quelconque des revendications précédentes contenant de 0,5 à 3,0% en masse d'alpha-amylase(s) et de 1,0 à 30,0% en masse d'hémicellulase(s), de préférence de 1,0 à 2,0% en masse d'alpha-amylase(s) et de 1,2 à 15,0% en masse d'hémicellulase(s).

13. Améliorant selon l'une quelconque des revendications précédentes contenant une ou plusieurs alpha-amylase(s) et une ou plusieurs hémicellulase(s), et de préférence également une ou plusieurs glucose oxydase(s) et/ou une ou plusieurs phospholipase(s).

14. Améliorant selon l'une quelconque des revendications précédentes contenant de 2 à 30% en masse d'acide ascorbique, de préférence de 5 à 20% en masse, et encore de préférence de 7 à 15% en masse.

15. Améliorant selon l'une quelconque des revendications précédentes comprenant du monochlorhydrate de L-cystéïne et/ou du chlorure de sodium

16. Utilisation dans la préparation en boulangerie d'un améliorant liquide de panification, utilisation comprenant la dispersion dans une phase liquide aqueuse, de préférence de l'eau, d'un améliorant solide selon l'une quelconque des revendications 1 à 15 de manière à obtenir un améliorant liquide de panification.

17. Utilisation dans la préparation d'une pâte pour produit cuit de boulangerie d'un améliorant solide suivant l'une quelconque des revendications 1 à 15, utilisation comprenant la dispersion dudit améliorant solide dans une phase liquide aqueuse, de préférence de l'eau, de manière à obtenir un améliorant liquide et l'incorporation d'une quantité dudit améliorant liquide dans la pâte.

18. Utilisation selon l'une des revendications 16 et 17, dans laquelle la pâte est une pâte fermentée de préférence choisie dans le groupe des pâtes à pain, des pâtes pour brioche et des pâtes pour viennoiserie.

19. Utilisation selon l'une des revendications 16 à 18, dans laquelle l'améliorant liquide contient de 1 à 25 % en masse, de préférence de 3 à 20% en masse et encore de préférence de 6 à 12% en masse de l'améliorant solide.

20. Procédé pour la préparation d'une pâte pour produit cuit de boulangerie, procédé comprenant
• la dispersion dans une phase liquide aqueuse, de préférence de l'eau, d'un améliorant solide selon l'une quelconque des revendications 1 à 15, de manière à obtenir un améliorant liquide et
• incorporation d'une quantité dudit améliorant liquide dans la pâte.

21. Procédé pour la préparation d'un produit cuit de boulangerie, procédé comprenant :
• la dispersion dans une phase liquide aqueuse, de préférence de l'eau, d'un améliorant solide selon l'une quelconque des revendications 1 à 15 de manière à obtenir un améliorant liquide,
• l'incorporation d'une quantité dudit améliorant liquide dans la pâte, et
• la cuisson de la pâte.

22. Procédé selon l'une des revendications 20 et 21, selon lequel l'améliorant liquide contient de 1 à 25 % en masse, de préférence de 3 à 20% en masse et encore de préférence de 6 à 12% en masse de l'améliorant solide.

23. Procédé selon l'une quelconque des revendications 20 à 22, dans lequel l'améliorant liquide est incorporé dans la pâte en une quantité correspondant à un pourcentage du boulanger de l'améliorant solide de 0,01 à 1,00 ; de préférence de 0,05 à 0,50 ; et encore de préférence de 0,08 à 0, 25.

24. Procédé selon l'une quelconque des revendications 20 à 23 consistant en un procédé pour la fabrication de pain français.
